# EUROPÄISCHE PATENTSCHRIFT

(11) **EP 1 613 462 B1**
(45) Veröffentlichungstag und Bekanntmachung des Hinweises auf die Patenterteilung: **14.01.2015**
(21) Anmeldenummer: 04704999.4
(22) Anmeldetag: 24.01.2004
(51) Int. Cl.: B29C 49/56, B29C 33/20

(54) **FORMVORRICHTUNG MIT EINER EINRICHTUNG ZUM BEWEGEN DER FORMWERKZEUGE**
Moulding apparatus with a device for moving the moulds
Appareil de moulage avec un dispositif pour déplacer les moules

(30) Priorität: 17.04.2003 DE 10317712
(43) Veröffentlichungstag der Anmeldung: 11.01.2006
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2004/000596
(87) Internationale Veröffentlichungsnummer: WO 2004/091893

(56) Entgegenhaltungen:
- US-A- 3 877 861
- US-A- 3 883 286

## Beschreibung

Die Erfindung betrifft eine Formvorrichtung gemäß der Merkmalsausgestaltung des Oberbegriffes des Patentanspruches 1.

Im Stand der Technik (DE 199 26 329 A1) sind Verfahren und Vorrichtungen zum Herstellen von Behältern bekannt, bei denen ein Schlauch plastifizierten Kunststoffmaterials in eine Formeinrichtung hinein extrudiert wird, das eine Ende des Schlauches durch Verschweißen verschlossen wird und durch Erzeugen eines am Schlauch wirksamen pneumatischen Druckgradienten dieser aufgeweitet und zur Bildung des Behälters an die formgebende Wand der Formeinrichtung angelegt wird. Über einen entsprechenden Fülldorn wird dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei zwei Kopfformgebungsbacken mittels hydraulischer Antriebsmittel für den Erhalt einer Schließstellung aufeinander zu und in eine ihrer Öffnungsstellungen voneinander gegenläufig wegbewegbar sind. Die mittels der beiden Kopfbacken zu erzeugenden Kopfgeometrien umfassen dabei regelmäßig auch das Halsteil des Kunststoffbehälters - auch in Form von Ampullen -, das über eine Trennstelle von einem Kopfstück verschlossen für einen FluidEntnahmevorgang öffenbar ist, sobald das Kopfstück über einen an ihm an) geformten Knebelteil über die Trennstelle abgetrennt und dergestalt vom Kunststoffbehälter entfernt wird.

Dahingehende Verfahren sind in einer Vielzahl von Ausführungsformen bekannt und finden verbreitet Anwendung bei Verpackungssystemen für flüssige oder pastöse Produkte, beispielsweise im Rahmen des bekannten bottelpack^{®}-Systems.

Die in der Praxis regelmäßig zum Einsatz kommenden hydraulischen Antriebssysteme für die jeweilige Zustellbewegung des Formwerkzeuges werfen insoweit Probleme auf, als etwaige Leckagen zu Verschmutzungen mit dem Fluid führen können, was insbesondere beim Einsatz der formgebenden Maschinen für Kunststoffbehälter in der Pharmazeutik und im Lebensmittelbereich sowie allgemein in der Medizintechnik zu Problemen führt. Auch ist der Wartungsaufwand erhöht und häufig erreichen die hydraulischen Antriebssysteme nicht die für eine Massenproduktion gewünschten Taktzeiten oder hohe Taktzeiten gehen zu Lasten einer genauen Positionierung der Formwerkzeuge.

Durch die US 3 883 286 A, gemäss dem Oberbegriff des Anspruchs 1, ist eine gattungsgemäße Formvorrichtung bekannt, zum gegenläufigen Bewegen zweier Formwerkzeuge zum Erzeugen von Behältergeometrien bei Kunststoffbehältern mittels einer Kulissensteuerung, die das jeweilige Formwerkzeug zumindest für das Schließen der Form in eine Schließstellung bringt, und von einem Antrieb betätigbar ist, wobei die Kulissensteuerung eine bogenförmig ausgestaltete Doppelschlitzführung in einem Zusteilteil aufweist, in die ein Betätigungsteil eingreift, das von einem mittels des Antriebes antreibbaren Rotationsteil ansteuerbar in eine der jeweiligen Öffnungsund Schließstellung des Formwerkzeuges entsprechende Position verfahrbar ist. Das Zusteilteil wirkt mit einem schienengeführten Schlittenteil zusammen, das von dem Zustellteil kraftschlüssig in die Schließstellung gebracht wird. Eine vergleichbare Einrichtung zeigt auch die US 3 877 861 A, die anstelle der schlitzgeführten Formwerkzeuge zu deren Betätigung in der Art einer Presse eine Kniehebelmechanik einsetzt.

Ausgehend von diesem Stand der Technik liegt der Erfindung die Aufgabe zugrunde, eine Formvorrichtung zum Bewegen mindestens eines Formwerkzeuges zu schaffen, die es erlaubt, moderne Antriebskonzepte zum Einsatz zu bringen, beispielsweise in Form elektrischer oder pneumatischer Antriebe, deren Wartungsaufwand reduziert ist und die insbesondere große Ausstoßraten an dem zu produzierenden Gut, wie Kunststoffbehältern, erlauben bei gleichzeitig hoher Positioniergenauigkeit für die Formwerkzeuge. Eine dahingehende Aufgabe löst eine Formvorrichtung mit den Merkmalen des Patentanspruches 1 in seiner Gesamtheit.

Bei der erfindungsgemäßen Formvorrichtung ist zum Bewegen mindestens eines Formwerkzeuges, insbesondere zum Erzeugen von Kopfgeometrien bei Kunststoffbehältern, eine Kulissensteuerung vorgesehen, die das jeweilige Formwerkzeug zumindest für das Schließen der Form in eine Schließstellung bringt, wobei die Kulissensteuerung von einem Antrieb betätigbar ist. Aufgrund der Kulissensteuerung ist ein neuartiges Antriebs- und Bewegungskonzept für das jeweilige Formwerkzeug gegeben, das es erlaubt, auf hydraulische Antriebsmittel vollständig zu verzichten und als Antrieb kommt vorzugsweise ein elektrischer oder ein pneumatischer Antrieb zum Einsatz. Die genannte Kulissensteuerung läßt sich aber auch nach wie vor konventionell noch mittels eines hydraulischen Antriebes betätigen, sofern dies der jeweilige Anwendungsfall geboten erscheinen läßt und hohe Anforderungen an ein steriles Abfüllen bzw. Reinraumqualitäten nicht gefordert sind.

Die erfindungsgemäße Formvorrichtung mit antreibbarer Kulissensteuerung für eine Schließbewegung mit dem Formwerkzeug erlaubt einen gleichförmigen, sicheren und positionsgenauen Antrieb des jeweiligen Formwerkzeuges und benötigt nur einen geringen Wartungsaufwand. Durch die Kulissensteuerung kann in zeitlich dichter Abfolge eine Vielzahl von Öffnungs- und Schließvorgängen vorgenommen werden, was mit der erfindungsgemäßen Formvorrichtung zu einem hohen Ausstoß an zu produzierendem Gut führt, insbesondere in Form von blasgeformten und steril befüllten Kunststoffbehältern.

Bei der voliegenden Ausführungsform der erfindungsgemäßen Formvorrichtung weist die Kulissensteuerung eine Schlitzführung in einem Zustellteil auf, in die ein Betätigungsglied eingreift, das von einem mittels des Antriebes antreibbaren Rotationsteil ansteuerbar in eine der Öffnungs- und Schließstellung des Formwerkzeuges entsprechende Position verfahrbar ist. Hierdurch ist eine sichere und positionsgenaue Führung erreicht bei definiert vorgebbaren Schließkräften über die Kulissensteuerung.

Bei der vorliegenden Ausführungsform der erfindungsgemäßen Formvorrichtung wirkt das Zustellteil mit einem schienengeführten Schlittenteil zusammen, das von dem Zustellteil kraftschlüssig in die Schließstellung des Formwerkzeuges bringbar ist. Vorzugsweise ist dabei das Schlittenteil gemeinsam mit dem Formwerkzeug in dessen Schließstellung bringbar, wobei das Formwerkzeug unabhängig von dem Schlittenteil mittels eines Rückstellmittels in seine Öffnungsstellung rückstellbar ist. Über die genannte Schienenführung für das Schlittenteil wird eine steife Maschinenauslegung für die Formvorrichtung erreicht und über die getrennte Rückstellbewegung von Formwerkzeug und Schlittenteil sind Hemmnisse im Betrieb mit Sicherheit ausschließbar.

Bei der vorliegenden Ausführungsform der erfindungsgemäßen Formvorrichtung ist über ein zentrales Einstellmittel, vorzugsweise in Form eines Energiespeichers, die maximal Schließkraft für das Formwerkzeug vorgebbar.

Als Energiespeicher eignen sich dabei Druckfederelemente, beispielsweise in Form von Tellerfedern od. dgl.. Unabhängig von der aufgebrachten Schließkraft der Kulissensteuerung läßt sich diese über das Einstellmittel sinnfällig begrenzen.

Bei einer weiteren besonders bevorzugten Ausführungsform der erfindungsgemäßen Formvorrichtung sind paarweise die Formwerkzeuge gegenüberliegend von jeweils einer Kulissensteuerung synchron in ihre Schließstellung bringbar. Vorzugsweise ist dabei des weiteren vorgesehen, dass über ein vom Antrieb betätigbares Getriebe zwei Kulissensteuerungen eines Schlittenteils antreibbar sind. Des weiteren ist vorzugsweise vorgesehen, dass zwei Schlittenteile mit jeweils zwei Kulissensteuerungen gegenläufig über die Schienenführung aufeinander zu oder voneinander weg bewegbar sind. Hierdurch lassen sich insgesamt vier Formwerkzeuge mit in Reihe hintereinander angeordneten Formgeometrien zum Herstellen mehrerer Kopfgeometrien paarweise zusammenwirkend synchron für Formungs- und Entformungsvorgänge ansteuern.

Im folgenden wird die erfindungsgemäße Vorrichtung anhand eines Ausführungsbeispiels nach der Zeichnung näher erläutert.

Dabei zeigen in prinzipieller und nicht maßstäblicher Darstellung die
- Fig.1: in Draufsicht einen Teil der Formvorrichtung mit Formwerkzeug in Schließstellung;
- Fig.2: in Draufsicht einen Teil der Formvorrichtung mit Formwerkzeug in Öffnungsstellung, wobei bei Aneinanderlage der Teile der Formvorrichtung längs der Schließtrennlinie I - I sich die Gesamt-Formvorrichtung ergibt;
- Fig.3: einen Schnitt längs der Linie II - II in Fig.1.

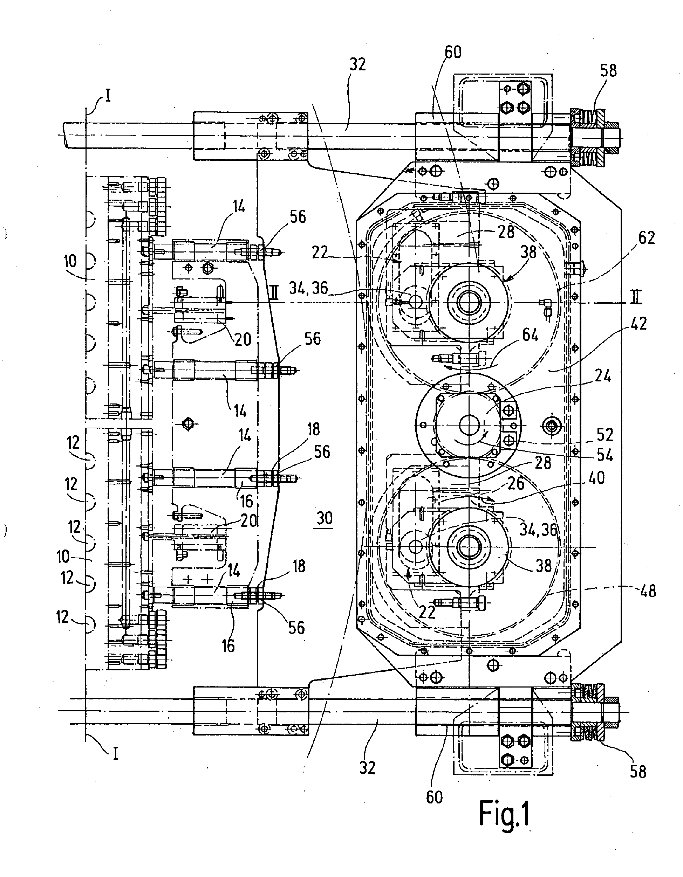

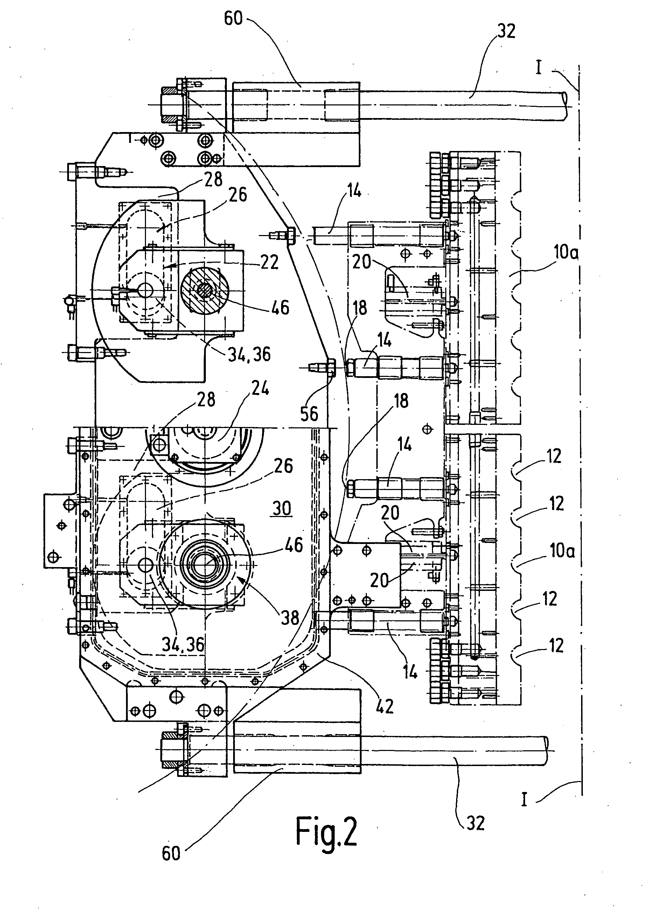

Zunächst wird ein Teil der Formvorrichtung zum Bewegen eines Formwerkzeuges 10 anhand des unteren Bildausschnittes gemäß der Darstellung nach der Fig.1 näher erläutert. An seiner freien Stirnseite weist das Formwerkzeug 10 muldenförmige Ausnehmungen 12 auf, die dergestalt Formhälften ausbilden zum Erzeugen von Kopfgeometrien bei nicht näher dargestellten Kunststoffbehältern. Zum Erzeugen der dahingehenden Kopfgeometrien arbeitet das Formwerkzeug 10 mit einem korrespondierenden Formwerkzeug 10a mit entsprechend gebildeten Ausnehmungen 12 zusammen, wie es beispielhaft in Blickrichtung auf die Fig.2 gesehen unten dargestellt ist. Das Formwerkzeug 10 ist auf seiner den Ausnehmungen 12 gegenüberliegenden Seite mit zwei Einstellteilen 14 verbunden, deren Länge über mindestens ein Anschlagteil 16 einstellbar ist, so dass dergestalt durch die Einstellteile 14 eine variable Anschlagfläche 18 vorgegeben ist. Hierdurch läßt sich das Formwerkzeug 10 an seiner freien Stirnseite längs einer Schließtrennlinie I - I ausrichten und des weiteren ist das Formwerkzeug 10 über ein Rückstellmittel 20, beispielsweise in Form eines üblichen Pneumatikzylinders, selbständig längs einer Führung (nicht dargestellt) von der in der Fig.1 gezeigten Schließstellung rückstellbar gemäß der Darstellung nach der Fig.2.

Des weiteren weist die Formvorrichtung zum Bewegen des Formwerkzeuges 10 eine als Ganzes mit 22 bezeichnete Kulissensteuerung auf, über die das jeweilige Formwerkzeug 10 für das Schließen der Form längs der Schließtrennlinie I - I ansteuerbar ist, wobei die Kulissensteuerung 22 wiederum von einem Antrieb 24, vorzugsweise in Form eines Elektromotors, beispielsweise in Form eines elektrischen Schrittmotors, betätigbar ist. Hierfür weist die Kulissensteuerung 22 eine Schlitzführung 26 in einem Zustellteil 28 auf, wobei das Zustellteil 28 in einem Schlittenteil 30 integriert und mit diesem zusammen in Schließ- und Öffnungsrichtung des Formwerkzeuges 10 entlang zweier Schienenführungen 32 verfahrbar ist. Die Schlitzführung 26 ist querverlaufend zu der Schienenführung 32 sowie zu der Zustellrichtung des Formwerkzeuges 10 angeordnet.

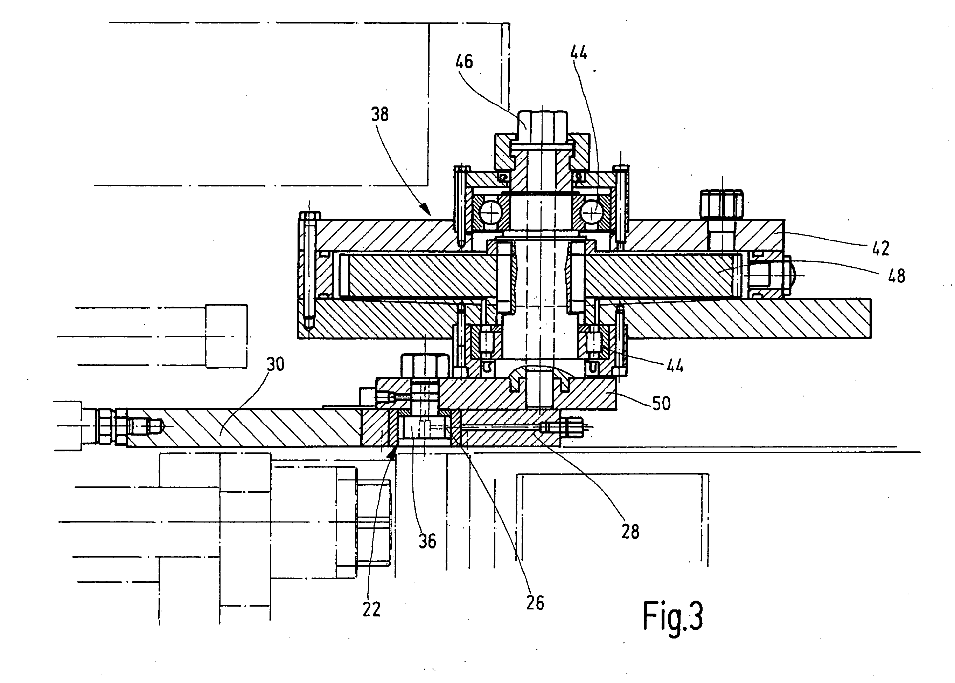

In die Schlitzführung 26 greift ein Betätigungsglied 34 in Form einer Kurvenrolle 36 (vgl. Fig.3) ein. Zum Verschwenken des Betätigungsgliedes 34 bzw. der Kurvenrolle 36 dient ein mittels des Antriebes 24 antreibbares Rotationsteil 38, das in Blickrichtung auf die Fig.1 gesehen eine Schwenkbewegung des Betätigungsgliedes 34 längs des Pfeiles 40 erlaubt, um dergestalt das Zustellteil 28 zusammen mit dem Schlittenteil 30 von seiner in der Fig.1 gezeigten Schließstellung in eine rückwärtige Öffnungsposition zu verfahren gemäß der Darstellung nach der Fig.2. Für die umgekehrte Bewegungsrichtung in Schließstellung ist entgegen dem Pfeil 40 das Zustellteil 28 nebst Schlittenteil 30 durch eine entsprechende Schwenkbewegung mit dem Betätigungsglied 34 (Kurvenrolle) in Richtung der Schließtrennlinie I-I zuzustellen.

Der nähere Aufbau des als Ganzes mit 38 bezeichneten Rotationsteils ergibt sich insbesondere aus der Darstellung nach der Fig.3. So ist zunächst das Rotationsteil 38 in einer plattenartigen Maschinenhalterung 42 stationär aufgenommen, die sich zwischen den beiden Schienenführungen 32 erstreckt. In dieser Maschinenhalterung 42 ist drehbar über entsprechende Rollen- und Wälzlager 44 und mit vertikaler Ausrichtung eine Antriebswelle 46 angeordnet, die mit einem Zahnkranz 48 fest verbunden durch diesen antreibbar ist. Auf der Unterseite der Antriebswelle 46 und mithin unterhalb des Wälzlagers 44 ist ein Hebelstück 50 fest mit der Antriebswelle verbunden, wobei das dahingehende Hebelstück 50 an seiner in Blickrichtung auf die Fig.3 gesehen linken vorderen freien Seite von der Kurvenrolle 36 durchgriffen ist, die sich im Hebelstück 50 frei drehen kann. Unterhalb des Hebelstückes 50 ist die Schlitzführung 26 in dem Zustellteil 28 angeordnet, das wiederum integrativer Bestandteil des Schlittenteils 30 ist. Mit den Zähnen des Zahnkranzes 48 des Rotationsteils 38 kämmen Zähne des Antriebszahnkranzes 52, der von dem elektrischen Antrieb 24, beispielsweise in Form eines Schrittmotors, antreibbar ist. Die Antriebsrichtung ist mit einem Pfeil 54 angegeben, wobei bei der dahingehenden Antriebsrichtung das Formwerkzeug 10 rückwärts in seine Öffnungsstellung bewegt wird.

An seiner freien Stirnseite weist das Schlittenteil 30 Mitnahmeteile 56 auf, die bei Bewegen des Formwerkzeuges in seine Schließstellung längs der Schließtrennlinie I - I über die Einstellteile 14 das in der Art eines Bewegungsschlittens ausgebildete Formwerkzeug mitnehmen und in die Schließstellung gegen die Bewegungsrichtung des gegenüberliegenden Formwerkzeuges 10a bringen, sofern sich dieses von seiner Öffnungsstellung nach der Fig.2 gleichfalls in seine Schließstellung längs der Schließtrennlinie I - I nach der Fig.1 bewegt. Um die Schließkräfte definiert einstellen zu können, ist an dem einen freien Ende einer jeden Schienenführung 32 ein zentrales Einstellmittel in Form eines Tellerfederpaketes 58 angeordnet, das jeweils auf die plattenartige Maschinenhalterung 42 einwirkt, welches zu diesem Zweck über Endführungen 60 längsverfahrbar an den Schienenführungen 32, gelagert ist. Werden nun längs der Schließtrennlinie I - I die Schließkräfte zu hoch, kann dergestalt die gesamte Anordnung von Formwerkzeug 10 mit Schlittenteil 30 und Maschinenhalterung 42 nach rückwärts entgegen der Wirkung der Tellerfederpakete 58 zurückgestellt werden. Dergestalt besteht auch eine Sicherheit, sofern es ungewollt einmal zu einer Maschinenkollision insbesondere im Bereich der Formwerkzeuge 10,10a kommen sollte.

Werden gemäß der Darstellung nach der Fig.1 Antriebszahnkranz 52 nebst Zahnkranz 48 in Richtung der Pfeile 54 bzw. 40 seitens des Antriebes 24 angetrieben, fährt das Schlittenteil 30 in seine Ausgangsstellung nach der Fig.2 zurück, wobei sich das Zustellteil 28 gleichfalls in die rückwärtige Lage bewegt und die Kurvenrolle 36 wird gegenüber der Darstellung nach der Fig.1 um 180° nach hinten verschwenkt. Demgemäß werden die Mitnahmeteile 56 des Schlittenteils 30 von den Einstellteilen 14 von der Anschlagfläche 18 wegbewegt und das jeweilige Formwerkzeug 10,10a wird dann über den Pneumatikzylinder 20 als Rückstellmittel in die Öffnungsstellung zurückgeholt und steht dann für einen erneuten Schließvorgang zur Verfügung. Für einen Formgebungsvorgang werden die paarweise gegenüberliegenden Formwerkzeuge 10,10a von ihrer jeweiligen Kulissensteuerung 22 synchron für einen Schließvorgang angesteuert. Demgemäß sind die Antriebe 24 für beide Formwerkzeuge 10,10a über eine zentrale Steuerung (nicht dargestellt) gemeinsam anzusteuern. Die dahingehende synchrone Ansteuerung erleichtert auch das Entformen des Kunststoffbehälters über sein mit den Formwerkzeugen 10,10a hergestelltes Kopfteil. Im Hinblick auf den vergleichbaren Aufbau der beiden Teile nach den Fig.1 und 2 werden die in der Fig.1 verwendeten Bezugszeichen auch entsprechend gemäß der Darstellung nach der Fig.2 wiedergegeben. Dem Grunde nach besteht aber auch die Möglichkeit, mit der genannten Kulissensteuerung 22 nur ein Formwerkzeug 10 verfahrbar zu gestalten und dergestalt das Formwerkzeug 10 gegen ein feststehendes Formwerkzeug (nicht dargestellt) für einen Formvorgang zu verfahren. Mit der beschriebenen Formvorrichtung lassen sich jedenfalls sehr hohe Taktsequenzen und mithin Herstellgeschwindigkeiten für Kunststoffbehälter (nicht dargestellt) erzielen. Ferner ist über die Kulissensteuerung 22 eine exakte Positionierung des jeweiligen Formwerkzeuges 10, 10a möglich.

Um eine noch höhere Ausstoßrate zu erzielen, wird in einer Reihe nebeneinander angeordnet mindestens ein weiteres Formwerkzeug 10 vorgesehen, das über eine entsprechende Kulissensteuerung 22, wie beschrieben, von dem zentralen Antrieb 24 ansteuerbar ist. Demgemäß findet die beschriebene Anordnung nach der Fig.1 in Blickrichtung auf diese oberhalb des Antriebes 24 nochmals Anwendung und der weitere Zahnkranz 62 ist längs des Pfeiles 64 antreibbar, sofern der Schlittenteil 30 von seiner in der Fig.1 gezeigten vorderen Position in seine rückwärtige Position nach der Fig.2 verfahren werden soll. Auch ist demgemäß die Schlitzführung 26 in derselben Richtung orientiert wie beschrieben. Demgemäß rollt sich für einen Längsbetätigungsvorgang die Kurvenrolle 36 längs einer Kreisbahn um die Antriebswelle 46 ab und nimmt dabei Zustellteil 28 und 30 in einer Längsbewegung parallel zu den beiden Schienenführungen 32 mit, wobei die Schlitzführung 26 ihre quer stehende Lage, wie in den Fig.1 und 2 dargestellt, nicht ändert. Da die Maximalkraftbegrenzung durch das jeweilige Tellerfederpaket 58 als Einstellmittel auf einer Seite der Schienenführung 32 realisiert ist, braucht die dahingehende Anordnung nicht bei der plattenartigen Maschinenhalterung 42 nach der Fig.2 vorgesehen zu sein.

## Patentansprüche

1. Formvorrichtung zum Bewegen mindestens eines Formwerkzeuges (10,10a), mittels einer Kulissensteuerung (22), die das jeweilige Formwerkzeug (10,10a) zumindest für das Schließen der Form in eine Schließstellung bringt, wobei die Kulissensteuerung (22) von einem Antrieb (24) betätigbar ist, wobei die Kulissensteuerung (22) eine Schlitzführung (26) in einem Zustellteil (28) aufweist, in die ein Betätigungsglied (34) eingreift, das von einem mittels des Antriebes (24) antreibbaren Rotationsteil (38) ansteuerbar in eine der Öffnungs- und Schließstellung des Formwerkzeuges entsprechende Position verfahrbar ist, und wobei das Zustellteil (28) mit einem schienengeführten (32) Schlittenteil (30) zusammenwirkt, das von dem Zustellteil (28) kraftschlüssig in die Schließstellung des Formwerkzeuges (10,10a) bringbar ist, **dadurch gekennzeichnet, dass** das Schlittenteil (30) gemeinsam mit dem Formwerkzeug (10,10a) in dessen Schließstellung bringbar ist, dass das Formwerkzeug (10,10a) unabhängig von dem Schlittenteil (30) mittels eines Rückstellmittels (20) in seine Öffnungsstellung rückstellbar ist, und dass über ein zentrales Einstellmittel (58), in Form eines Energiespeichers, die maximale Schließkraft für das Formwerkzeug (10,10a) vorgebbar ist.

2. Formvorrichtung nach Anspruch 1, **dadurch gekennzeichnet, dass** über ein vom Antrieb (24) betätigbares Getriebe zwei Kulissensteuerungen (22) eines Schlittenteiles (30) antreibbar sind.

3. Formvorrichtung nach Anspruch 1 oder 2, **dadurch gekennzeichnet, dass** als Antrieb (24) ein elektrischer oder pneumatischer Antrieb, insbesondere ein elektrischer Schrittmotor, eingesetzt ist.

## Claims

1. A moulding device for moving at least one moulding tool (10, 10a) by means of a link motion control element (22) which brings the respective moulding tool (10, 10a) into a closing position, at least for closing the mould, the link motion control element (22) being able to be actuated by a drive (24), the link motion control element (22) having a slot guide (26) in a feed component (28) and in which an actuating member (34) engages, the latter being able to be moved, actuated by a rotation component (38) that can be driven by means of the drive (24), into a position corresponding to the opening and closing position of the moulding tool, and the feed component (28) co-operating with a railguided (32) slide component (30) which can be brought with force-fit into the closing position of the moulding device (10, 10a) by the feed component (28), **characterised in that** the slide component (30) can be brought together with the moulding tool (10, 10a) into its closing position, that the moulding tool (10, 10a) can be reset to its opening position independently of the slide component (30) by a reset means (20), and that the maximum closing force for the moulding tool (10, 10a) can be specified by means of a central adjusting means (58) in the from of an energy accumulator.

2. The moulding device according to Claim 1, **characterised in that** two link motion control elements (22) of a slide component (30) can be driven by gears that can be actuated by the drive (24).

3. The moulding device according to Claim 1 or 2, **characterised in that** an electric or pneumatic drive, in particular an electric step motor, is used as the drive (24).

## Revendications

1. Installation de moulage pour déplacer au moins un outil (10, 10a) de moulage, au moyen d'une commande (22) à coulisse, qui met l'outil (10, 10a) de moulage respectif, au moins pour la fermeture du moule, dans une position de fermeture, la commande (22) à coulisse pouvant être actionnée par un entraînement (24), la commande (22) à coulisse ayant un guidage (26) par fente dans une pièce (28) d'avance, qu'attaque un élément (34) d'actionnement, qui, en pouvant être commandé par une pièce (38) de rotation pouvant être entraînée par l'entraînement (24), peut venir dans une position correspondant à la position d'ouverture et à la position de fermeture de l'outil de moulage, et dans laquelle la pièce (28) d'avance coopère avec une partie (30) formant chariot, qui est guidée sur rail (32) et qui peut être mise, positivement par la pièce (28) d'avance, dans la position de fermeture de l'outil (10, 10a) de moulage, **caractérisée en ce que** la partie (30) formant chariot peut, conjointement avec l'outil (10, 10a) de moulage, être mise dans la position de fermeture de celui-ci, **en ce que** l'outil (10, 10a) de moulage peut, indépendamment de la partie (30) formant chariot, être rappelé dans sa position d'ouverture à l'aide d'un moyen (20) de rappel, et **en ce que**, par un moyen (58) central de réglage sous la forme d'un accumulateur d'énergie, la force maximum de fermeture de l'outil (10, 10a) de moulage peut être donnée à l'avance.

2. Installation de moulage suivant la revendication 1, **caractérisée en ce que** deux commandes (22) à coulisse d'une partie (30) formant chariot peuvent être entraînées par une transmission pouvant être actionnée par l'entraînement (24).

3. Installation de moulage suivant la revendication 1 ou 2, **caractérisée en ce qu'**il est utilisé, comme entraînement (24), un entraînement électrique ou pneumatique, notamment un moteur électrique pas à pas.
